(19) **Europäisches Patentamt / European Patent Office / Office européen des brevets**

(11) **EP 3 933 809 B1**

(12) **FASCICULE DE BREVET EUROPEEN**

(45) Date de publication et mention
de la délivrance du brevet:
**25.03.2026 Bulletin 2026/13**

(21) Numéro de dépôt: **21183025.2**

(22) Date de dépôt: **01.07.2021**

(51) Classification Internationale des Brevets (IPC):
**G01C 23/00** (2006.01) **G08G 5/21** (2025.01)
**G08G 5/34** (2025.01) **G08G 5/53** (2025.01)
**G08G 5/55** (2025.01) **G08G 5/74** (2025.01)
**G08G 5/76** (2025.01) **G01C 21/20** (2006.01)
**G08G 5/59** (2025.01) **G08G 5/80** (2025.01)

(52) Classification Coopérative des Brevets (CPC):
**G08G 5/21; G01C 21/20; G08G 5/34; G08G 5/53;
G08G 5/55; G08G 5/74; G08G 5/76;** G08G 5/59;
G08G 5/80

(54) **PROCÉDÉ DE DÉTERMINATION DE TRAJECTOIRES DE CONTOURNEMENT POUR UN AÉRONEF**

VERFAHREN ZUR BESTIMMUNG VON BYPASS-FLUGBAHNEN FÜR EIN FLUGZEUG

METHOD FOR DETERMINING THE BYPASS TRAJECTORIES FOR AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.07.2020 FR 2006998**

(43) Date de publication de la demande:
**05.01.2022 Bulletin 2022/01**

(73) Titulaire: **THALES
92400 Courbevoie (FR)**

(72) Inventeurs:
• **THIRIET, Aurélien
33700 MERIGNAC (FR)**
• **DIAZ PINEDA, Jaime
33700 MERIGNAC (FR)**
• **HAURET, Daniel
33700 MERIGNAC (FR)**

(74) Mandataire: **Lavoix
2, place d'Estienne d'Orves
75441 Paris Cedex 09 (FR)**

(56) Documents cités:
FR-A1- 2 789 771    FR-A1- 2 969 753
US-A1- 2007 276 553    US-A1- 2008 154 493

EP 3 933 809 B1

**Description**

La présente invention concerne un procédé de détermination de trajectoires de contournement d'une zone de danger potentielle s'étendant sur une portion d'une trajectoire principale définie pour un aéronef dans un environnement. La présente invention concerne aussi une installation électronique associée. La présente invention concerne également un aéronef comprenant une telle installation électronique.

Dans le domaine de l'aéronautique, un pilote peut être amené à rencontrer des situations imprévues, telles qu'une menace, une panne ou des conditions météorologiques dégradées.

Aussi, pour mener à bien sa mission et assurer sa survie et celle de son équipage, le pilote prépare sa mission en amont de sorte à définir une trajectoire principale et des alternatives de trajectoires en cas de situations imprévues.

Cependant, du fait de données incomplètes, du manque d'information sur les menaces potentielles ou de contremesures de détection déployées sur le terrain, le déroulement de la mission est affecté d'un haut degré d'incertitude.

Ainsi, une fois dans l'action, lorsque le pilote se retrouve dans une zone de danger, il devra envisager de façon réactive la meilleure manière de contourner la zone de danger selon ses compétences, sa connaissance de l'environnement, son intuition et ses techniques de survie.

Le risque de la pratique existante réside dans le fait que le pilote choisit au sol ce qu'il considère comme étant la meilleure trajectoire avec un haut degré d'incertitude sur l'information concernant l'ennemi. Parfois, plusieurs trajectoires sont possibles et le choix du pilote est orienté par son expertise et sa connaissance du terrain. En vol, suite à une situation imprévue, le pilote peut être amené à modifier sa trajectoire manuellement, tâche qui devient très complexe sous contrainte temporelle de réaction (par exemple se retrouver soudainement dans une zone de danger). Cette pratique présente donc des limites dans la mesure où la moindre défaillance du pilote est susceptible de lui être fatale.

Il est notamment noté, selon le modèle de conscience de la situation proposé par Endsley en 1988, qu'une bonne prise de décision demande une bonne compréhension de la situation et une gestion adéquate de l'urgence de la décision. Cependant, une bonne conscience de la situation n'est pas suffisante pour assurer une bonne prise de décision. Par exemple, Endsley en 1995 a identifié que dans 27% des accidents aéronautiques, les pilote avaient une bonne conscience de la situation, et ont malgré tout pris une mauvaise décision. La raison principale en est des environnements très complexes ou des ressources cognitives limitées par le temps de décision ou les contraintes de la situation (conditions de stress).

En particulier, la prise de décisions avec des opérateurs expérimentés n'est généralement pas un problème quand la situation est connue et bien définie. Cependant, quand la situation est complètement nouvelle et incertaine, la prise de décisions, même pour des opérateurs expérimentés, est difficile. De plus, quand la survie est en jeu, l'instinct pousse à s'éloigner de la menace, parfois en ajoutant des nouveaux dangers avec un risque de dégrader les chances de survie.

Les documents FR 2 969 753 A, US 2007/0276553 A et US 2008/154493 A décrivent des exemples de procédé de détermination de trajectoires. Le document FR 2 789 771 A1 décrit un procédé de détermination de trajectoire horizontale de contournement de zones dangereuses.

Il existe donc un besoin pour un procédé permettant d'améliorer la prise de décision d'un pilote face à des situations imprévues.

A cet effet, la présente description a pour objet un procédé de détermination de trajectoires de contournement d'une zone de danger potentielle s'étendant sur une portion d'une trajectoire principale définie pour un aéronef dans un environnement, la trajectoire principale ayant été définie sans la connaissance de la zone de danger potentielle, les trajectoires de contournement rejoignant la trajectoire principale une fois la zone de danger potentielle contournée, le procédé étant mis en œuvre par une installation électronique, le procédé comprenant une phase de préparation comprenant les étapes suivantes :

- l'obtention d'une image de l'environnement destiné à être survolé par l'aéronef entre un point de départ et un point d'arrivée, une représentation d'une trajectoire principale destinée à être parcourue par l'aéronef entre le point de départ et le point d'arrivée ayant été ajoutée sur l'image,
- le maillage de l'image en zones élémentaires,
- la détermination, pour chaque zone élémentaire de l'image, d'une valeur de coût en fonction d'au moins un critère de coût, le au moins un critère de coût étant relatif au survol de l'environnement par l'aéronef,
- l'échantillonnage de la trajectoire principale représentée sur l'image pour obtenir des points de trajectoire,
- pour chacun des points de trajectoire, la détermination, en fonction des valeurs de coût déterminées pour les zones élémentaires, de distances de coût entre ledit point de trajectoire et chaque zone élémentaire de l'image, l'ensemble des distances de coût déterminées pour ledit point de trajectoire, formant une carte de distances,
- pour chacun des points de trajectoire, la détermination, en fonction de la carte de distances, des trajectoires de coût minimal reliant ledit point de trajectoire à des points de trajectoire suivants pris dans le sens du vol de l'aéronef,

le procédé comprenant, en outre, une phase d'exploitation au cours de laquelle une zone de danger potentielle s'étendant sur une portion de la trajectoire principale a été identifiée alors même que l'aéronef survole l'environnement en suivant ladite trajectoire principale, la phase d'exploitation comprenant :

- la détermination en temps réel de la position de l'aéronef,
- la détermination du point de trajectoire, appelé point initial, correspondant à ou le plus proche dans le sens du vol de l'aéronef de la position de l'aéronef déterminée en temps réel, les points de trajectoire suivant le point initial dans le sens du vol de l'aéronef étant appelés points suivants, et
- la détermination de trajectoires de contournement reliant le point initial aux points suivants en fonction des trajectoires de coût minimal déterminées pour ledit point initial et de l'étendue de la zone de danger potentielle.

Selon d'autres aspects avantageux de l'invention, le procédé comprend une ou plusieurs des caractéristiques suivantes, prises isolément ou suivant toutes les combinaisons techniquement possibles :

- l'étape de détermination de trajectoires de contournement comprend l'élimination des trajectoires de coût minimal déterminées dont le point d'arrivée se trouve dans la zone de danger potentielle, les trajectoires de contournement étant les trajectoires de coût minimal restante ;
- l'étape de détermination de trajectoires de contournement comprend la détermination d'une trajectoire de contournement optimale lorsque plusieurs trajectoires de contournement ont été déterminées pour un même point initial, la trajectoire de contournement optimale étant la trajectoire de contournement dont le point d'arrivée est le plus proche du point initial ;
- la phase d'exploitation comprend l'affichage, sur un afficheur, d'une image de l'environnement survolé par l'aéronef, une représentation des éléments suivants ayant été ajoutée sur l'image affichée :

  • la trajectoire principale de l'aéronef, et
  • les ou au moins une trajectoire de contournement déterminée(s) ;

- la phase d'exploitation comprend une étape de modification de la trajectoire de l'aéronef par rapport à la trajectoire principale, en fonction de la ou des trajectoires de contournement représentées sur l'image affichée par l'afficheur en vue de contourner la zone de danger potentielle ;
- pour chaque zone élémentaire comprenant ou encadrant la représentation de la trajectoire principale sur l'image, la valeur de coût déterminée pour ladite zone élémentaire est obtenue en ajoutant une valeur additionnelle prédéterminée à la valeur de coût obtenue en fonction du ou des critères de coût ;
- l'environnement comprend au moins une zone de relief et/ou au moins une zone de danger et/ou au moins une zone d'intervisibilité pour un capteur et/ou au moins une zone de météo défavorable et/ou au moins une zone urbaine, le ou au moins un critère de coût étant choisi dans la liste constituée de :

  • un critère d'évitement des zones de relief par l'aéronef,
  • un critère d'évitement des zones de danger par l'aéronef,
  • un critère d'évitement des zones d'intervisibilité d'un capteur par l'aéronef,
  • un critère d'évitement des zones de météo défavorable par l'aéronef, et
  • un critère d'évitement des zones urbaines par l'aéronef ;

- la carte de distances de chaque point de trajectoire est déterminée par un algorithme de propagation Eikonale.

La présente description concerne, en outre, une installation électronique configurée pour mettre en œuvre un procédé de détermination tel que décrit précédemment.

La présente description concerne aussi un aéronef comprenant une installation électronique telle que décrite précédemment.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé de détermination tel que précédemment décrit lorsque le programme d'ordinateur est mis en œuvre sur l'unité de traitement des données.

La présente description concerne aussi un support lisible d'informations sur lequel est mémorisé un produit programme d'ordinateur tel que précédemment décrit.

D'autres caractéristiques et avantages de l'invention apparaîtront à la lecture de la description qui suit de modes de réalisation de l'invention, donnée à titre d'exemple uniquement, et en référence aux dessins qui sont :

- [Fig 1] figure 1, une représentation schématique d'une image d'un environnement destiné à être survolé par un aéronef, l'environnement comprenant des zones de danger et des zones de relief, l'image comprenant une représentation d'une trajectoire principale destinée à être suivie par l'aéronef,
- [Fig 2] figure 2, une représentation schématique d'un exemple d'un calculateur d'une installation électronique,
- [Fig 3] figure 3, un organigramme d'un exemple d'un procédé de détermination de trajectoires de contournement,
- [Fig 4] figure 4, un exemple de cartes de coût unitaires et de la carte de coût résultant de l'agrégation des cartes de coût unitaires,
- [Fig 5] figure 5, un exemple d'une carte de coût de dangers appliquée à l'image de la figure 1,
- [Fig 6] figure 6, un exemple d'une carte de coût de reliefs appliquée à l'image de la figure 1,
- [Fig 7] figure 7, un exemple de la carte de coût résultant de l'agrégation des cartes de coût de dangers et de reliefs illustrées respectivement sur les figures 5 et 6,
- [Fig 8] figure 8, un exemple d'une carte de distances obtenue en propageant une équation Eikonale depuis un point A,
- [Fig 9] figure 9, un exemple de la trajectoire de coût minimal obtenue depuis des points C1, C2, C3 de la zone considérée au point A de la carte de distances de la figure 8,
- [Fig 10] figure 10, une représentation schématique de l'image de la figure 1 avec une représentation ajoutée des trajectoires de coût minimal obtenues depuis un point initial (en amont d'une zone de danger potentielle) vers des points suivants, et
- [Fig 11] figure 11, une représentation schématique de l'image de la figure 1 avec une représentation ajoutée de la trajectoire de contournement optimale déterminée pour contourner une zone de danger potentielle depuis un point initial.

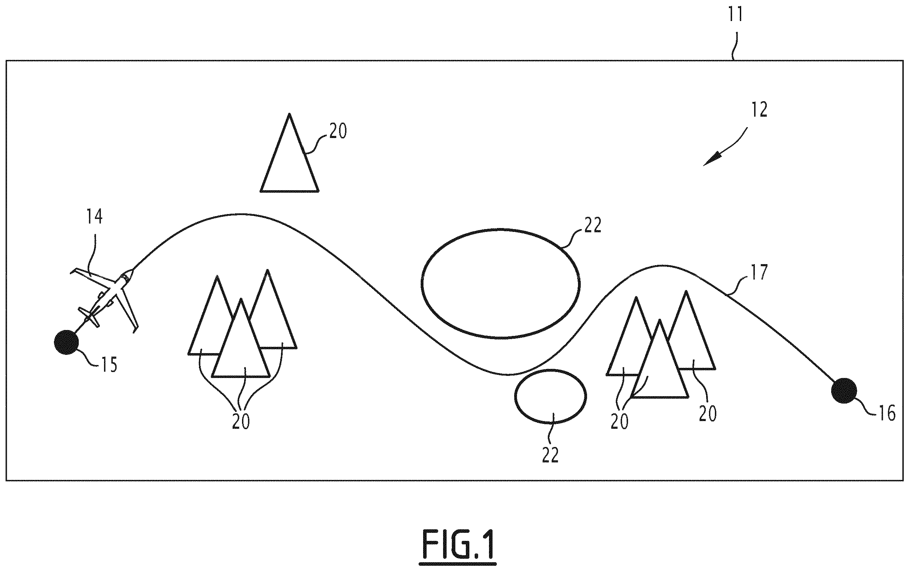

Une image 11 (ou cartographie) d'un environnement 12 destiné à être survolé par un aéronef 14 entre un point de départ 15 et un point d'arrivée 16 est illustrée par la figure 1. L'image 11 comprend, également, une représentation d'une trajectoire principale 17 destinée à être suivie par l'aéronef 14 entre le point de départ 15 et le point d'arrivée 16. La représentation de la trajectoire principale 17 a été ajoutée préalablement sur l'image 11, par exemple, par un opérateur. La trajectoire principale 17 a été définie en prenant en compte les contraintes de l'environnement présentes sur l'image 11. Ainsi, la définition de la trajectoire principale 17 a été réalisée sans la connaissance de zones de danger potentielles aux endroits de passage de cette trajectoire 17.

L'environnement 12 est, par exemple, un environnement comprenant des montagnes, des plaines, des vallées ou encore des forêts.

Dans l'exemple illustré par la figure 1, l'environnement 12 comprend des zones de relief 20 et des zones de danger 22.

Les zones de relief 20 sont des zones d'élévation par rapport au sol. Les zones de relief 20 comprennent, par exemple, au moins un élément parmi : une plaine, un plateau et une montagne.

Les zones de danger 22 sont des zones comprenant des menaces susceptibles de perturber le vol de l'aéronef 14. Les menaces sont, par exemple, des zones difficiles à survoler pour le pilote, des zones urbaines à ne pas survoler, des zones potentiellement soumises à des fumées de feu de forêt, ou encore des zones où la météo est incertaine et potentiellement dangereuse.

L'homme du métier comprendra que le nombre de zones de relief 20 et de zones de danger 22 est dépendant de l'environnement 12 survolé, un environnement 12 étant susceptible de comprendre aucune ou une pluralité de zones de relief 20 ou de zones de danger 20. En outre, l'homme du métier comprendra que l'environnement 12 est susceptible de comprendre d'autres types de zones, notamment des zones d'intervisibilité pour un capteur, c'est-à-dire des zones dans lesquelles un capteur est propre à acquérir des données en tous points de la zone. Le capteur est, par exemple, une caméra.

La trajectoire principale 17 a été définie au préalable en fonction de l'environnement 12, notamment des éventuelles zones de relief 20, de danger 22 et/ou d'intervisibilité pour un capteur. La trajectoire principale 17 a, par exemple, été définie par le pilote de l'aéronef 14 ou par un autre opérateur lors d'une phase de préparation d'une mission.

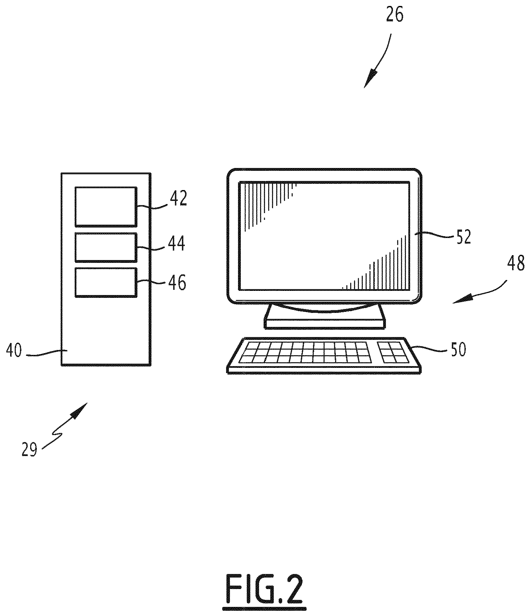

Un exemple d'une installation électronique 26 configurée pour déterminer des trajectoires de contournement de l'aéronef 14 par rapport à la trajectoire principale 17 est illustré par la figure 2.

Dans l'exemple illustré par la figure 2, l'installation électronique 26 comprend un calculateur 29, tel qu'un ordinateur.

Dans l'exemple illustré par la figure 2, le calculateur 29 comprend un processeur 40 comprenant une unité de traitement de données 42, des mémoires 44, un lecteur de support d'information 46 et, optionnellement, une interface homme-machine 48 comprenant un clavier 50 et un afficheur 52.

L'unité de traitement 42 est en interaction avec un produit programme d'ordinateur. Le produit programme d'ordinateur comporte un support d'information. Le support d'information est un support lisible par l'unité de traitement 42. Le support lisible d'information est un medium adapté à mémoriser des instructions électroniques et capable d'être couplé à un bus d'un système informatique.

**EP 3 933 809 B1**

A titre d'exemple, le support d'informations est une clé USB, une disquette ou disque souple (de la dénomination anglaise « Floppy disc »), un disque optique, un CD-ROM, un disque magnéto-optique, une mémoire ROM, une mémoire RAM, une mémoire EPROM, une mémoire EEPROM, une carte magnétique ou une carte optique.

Sur le support d'information est mémorisé le programme d'ordinateur comprenant des instructions de programme.

Le programme d'ordinateur est chargeable sur l'unité de traitement de données 42 et est adapté pour entraîner la mise en œuvre d'un procédé de détermination qui sera décrit dans la suite de la description.

Dans un autre exemple, le calculateur 29 est réalisé sous la forme d'un ou plusieurs composants logiques programmables, tel que des FPGA (de l'anglais Field Programmable Gate Array), ou encore sous la forme d'un ou plusieurs circuits intégrés dédiés, tel que des ASIC (de l'anglais Application Specific Integrated Circuit). Le calculateur 29 est dans ce cas configuré pour mettre en œuvre un procédé de détermination comme cela sera décrit dans la suite de la description.

L'installation électronique 26 est, par exemple, intégralement intégrée dans l'aéronef 14.

En variante, l'installation électronique 26 est, par exemple, disposée en partie dans une unité au sol et en partie dans l'aéronef 14. Dans ce cas, l'installation électronique 26 comprend, par exemple, un premier calculateur 29 au sol (configuré pour mettre en œuvre la phase de préparation décrite ci-après) et un deuxième calculateur 29 intégré dans l'aéronef 14 (configuré pour mettre en œuvre la phase d'exploitation décrite ci-après).

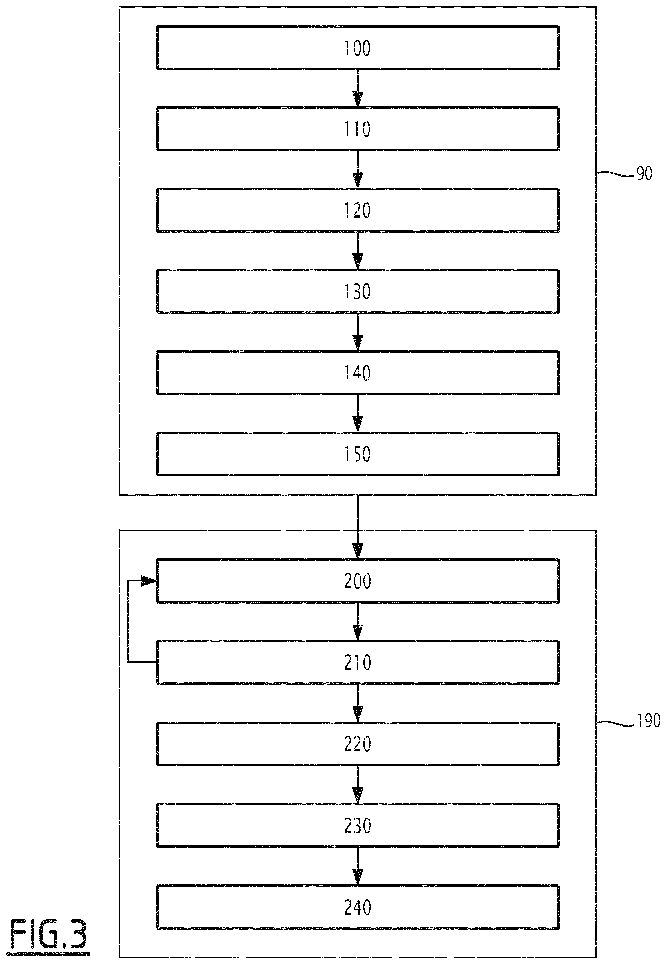

Le fonctionnement de l'installation électronique 26 va maintenant être décrit en référence à l'organigramme de la figure 3 qui illustre un exemple de différentes étapes de mise en œuvre d'un procédé de détermination de trajectoires de contournement pour un aéronef 14.

Le procédé de détermination comprend une phase de préparation 90 et une phase d'exploitation 190 (facultative). Les deux phases sont mises en œuvre par l'installation électronique 26, c'est-à-dire sont mises en œuvre par ordinateur.

La phase de préparation 90 est, avantageusement, mise en œuvre en préparation du vol de l'aéronef 14 de sorte à définir en amont des trajectoires de coût minimal depuis chaque point de trajectoire, de telles trajectoires de coût minimal étant de potentielles trajectoires de contournement en fonction de la position et de l'étendue de la zone de danger potentielle. Les trajectoires de coût minimal déterminées sont, par exemple, mémorisées (par exemple dans une mémoire 44) en vue d'être chargées dans l'aéronef 14 afin d'être consultables par le pilote en vol. En particulier, une image 11 de l'environnement 12 comprenant des représentations de la trajectoire principale 17 et des trajectoires de coût minimal déterminées est, par exemple, mémorisée.

En variante ou en complément, la phase de préparation 90 est mise en œuvre lors du vol de l'aéronef 14, par exemple, lorsque la trajectoire principale 17 de l'aéronef 14 a été modifiée. En effet, dans ce cas, les trajectoires de coût minimal qui auraient été déterminées au préalable ne sont plus valables. La mise en œuvre de la phase de préparation 90 permet alors de déterminer de nouvelles trajectoires de coût minimal à partir de la trajectoire principale modifiée.

La phase d'exploitation 190 est une phase au cours de laquelle l'aéronef 14 survole l'environnement 12 en suivant au moins initialement la trajectoire principale 17. Au cours de cette phase d'exploitation, une zone de danger potentielle s'étendant sur une portion de la trajectoire principale 17 a été identifiée.

La phase d'exploitation 190 a donc lieu durant la mission effective de l'aéronef 14.

La phase de préparation 90 comprend une étape 100 d'obtention d'une image 11 de l'environnement 12 destiné à être survolé par l'aéronef 14. Un exemple d'une telle image 11 a été décrit précédemment, notamment en référence à la figure 1. L'image 11 a, par exemple, été obtenue au moyen de mesures effectuées par un ou des capteurs. Par exemple, l'image 11 a été acquise par une caméra, par exemple, lors du vol d'un aéronef portant la caméra. En variante, l'image 11 a été acquise par un système satellite ou transmise par une liaison de données externe.

L'homme du métier comprendra que la trajectoire principale 17 représentée sur l'image 11 a été définie sans la connaissance de la zone de danger potentielle sur cette trajectoire principale 17 (sinon la trajectoire principale 17 aurait déjà été modifiée pour prendre en compte cette zone de danger potentielle).

La phase de préparation 90 comprend une étape 110 de maillage de l'image 11 en zones élémentaires, aussi appelées pixels.

Le maillage, aussi appelé grille, est le plus souvent régulier. On parle alors de grille non structurée. En variante, le maillage est irrégulier et forme ainsi une grille structurée. Le procédé en lui-même est agnostique du maillage choisi.

Le maillage comprend, par exemple, des zones élémentaires correspondant à des surfaces de 100 mètres par 100 mètres.

Le maillage est, par exemple, généré via un algorithme de Maubach. Un algorithme de Maubach affine localement un maillage, aussi appelé grille, jusqu'à satisfaction d'un critère sur le pas de grille local. Il s'agit généralement de concentrer les pixels dans certains types de zones dans lesquels on souhaite concentrer la précision des calculs. Typiquement, la concentration a lieu au voisinage immédiat de menaces ou de points d'intérêt.

La notion de zone élémentaire revêt différentes formes suivant le caractère isotrope ou anisotrope de la stratégie de coût décrite dans l'étape suivante du procédé :

- Dans le cas d'une stratégie de coût isotrope, une zone élémentaire est une portion de la zone géographique. Ce cas survient dans le cas de la génération de trajectoires via une stratégie de coût isotrope.
- Dans le cas d'une stratégie de coût anisotrope, une zone élémentaire est une portion de la zone géographique, associée à une information de dérivée temporelle. En effet, le coût en un point dépend alors des conditions dans lesquelles on traverse ce point. On associe alors à chaque point de la zone un nombre N de zones élémentaires, obtenus typiquement par des variations sur un cap et/ou une pente.

Dans la suite de la description, pour faciliter la compréhension, les exemples sont donnés dans le cas bidimensionnel et isotrope. Toutefois, l'homme du métier comprendra que le procédé se généralise de façon immédiate aux autres cas (tridimensionnel, N dimensions, et/ou anisotrope).

La phase de préparation 90 comprend une étape 120 de détermination, pour chaque zone élémentaire de l'image 11, d'une valeur de coût en fonction d'au moins un critère de coût.

Chaque critère de coût est relatif au survol de l'environnement 12 par l'aéronef 14. Plus précisément, chaque critère de coût est relatif aux contraintes rencontrées par l'aéronef 14 pour survoler l'environnement.

Chaque critère de coût affecte un poids (valeur de coût ou pénalisation) différent aux zones élémentaires en fonction des caractéristiques de l'environnement 12 dans cette zone et à des paramètres de vol choisis pour l'aéronef 14.

Par exemple, au moins un critère de coût est relatif aux éventuelles zones de relief et/ou de danger et/ou d'intervisibilité pour un capteur. A cet effet, le ou au moins un critère de coût est choisi dans la liste constituée de : un critère d'évitement des zones de relief par l'aéronef 14, un critère d'évitement des zones de danger par l'aéronef 14 et un critère d'évitement des zones d'intervisibilité d'un capteur par l'aéronef 14. Avantageusement, au moins un critère de coût favorise le survol des vallées par l'aéronef 14. En variante ou en complément, au moins un critère de coût est relatif à la météo et/ou à la présence de zones urbaines. Plus généralement, les critères de coûts sont relatifs à des éléments sémantiques qui ont du sens opérationnellement pour le choix de la construction d'une route.

Avantageusement, lorsque plusieurs critères de coût sont considérés, l'étape de détermination 120 comprend, pour chaque zone élémentaire, la détermination, d'une valeur intermédiaire de coût correspondant à chaque critère de coût. L'étape de détermination 120 comprend ensuite la combinaison linéaire des valeurs intermédiaires de coût obtenues pour la zone élémentaire pour obtenir la valeur de coût (globale) de la zone élémentaire.

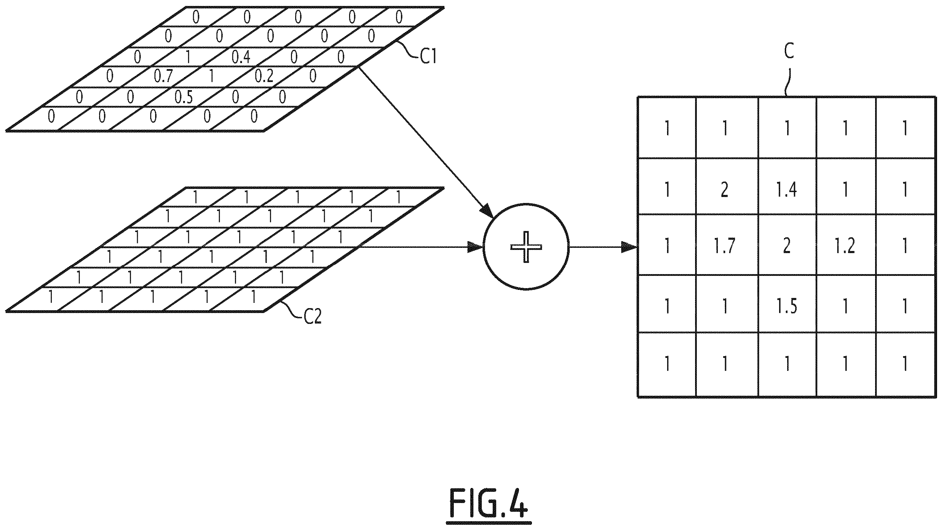

Un exemple de détermination de valeurs de coût est illustré par la figure 4. Dans cet exemple, il est considéré :

- une première stratégie de coût consistant à poser pour chaque pixel : $c_1$ = hauteur du sol à cette position de la carte (d'après un modèle numérique de terrain de la zone), et
une deuxième stratégie de coût consistant à évaluer le danger associé à chaque pixel, par l'estimateur suivant : $c_2$= zones de météo défavorable. Une trajectoire optimale suivant le premier critère produira une trajectoire survolant les vallées. Une trajectoire optimale suivant le deuxième critère produira une trajectoire évitant les zones de météo défavorable.

Une stratégie de coût agrégée est définie de la façon suivante : $c = a \times c_1 + b \times c_2$ avec a et b des coefficients de combinaison linéaire donnant un poids éventuellement différent aux différentes cartes de coût. En faisant varier a et b, on obtient une série de stratégies de coût, qui à leur tour fournissent des trajectoires différentes. On accroît ainsi davantage la richesse topologique des solutions fournies. Il est à noter que bien que dans cet exemple, l'agrégation est réalisée par une combinaison linéaire, l'agrégation peut être réalisée de multiples façons, par exemple, via une combinaison non linéaire.

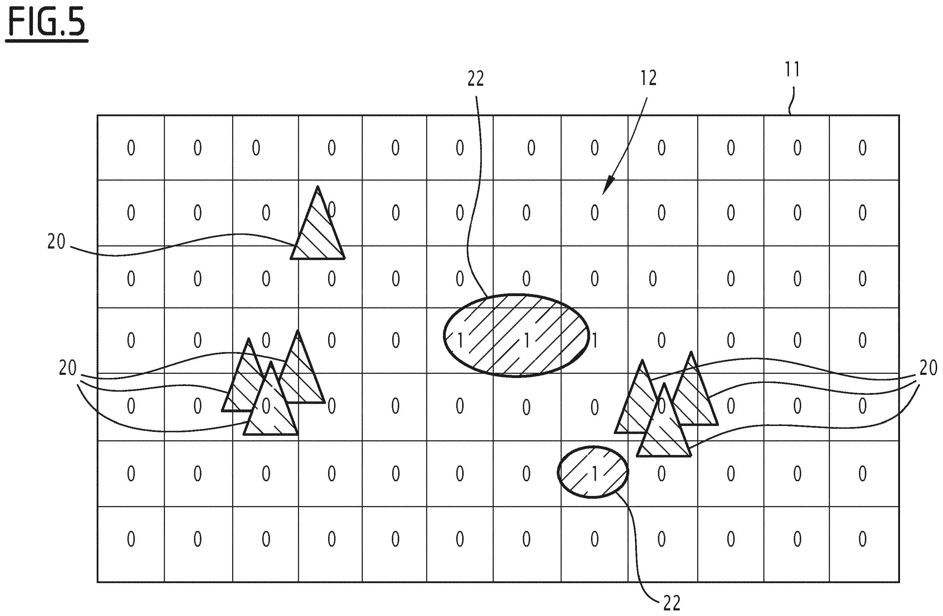

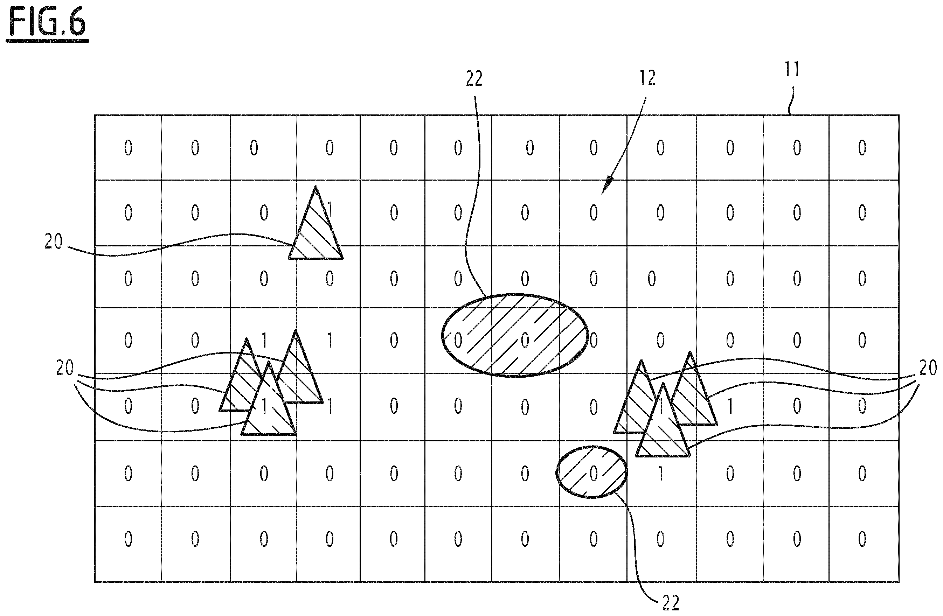

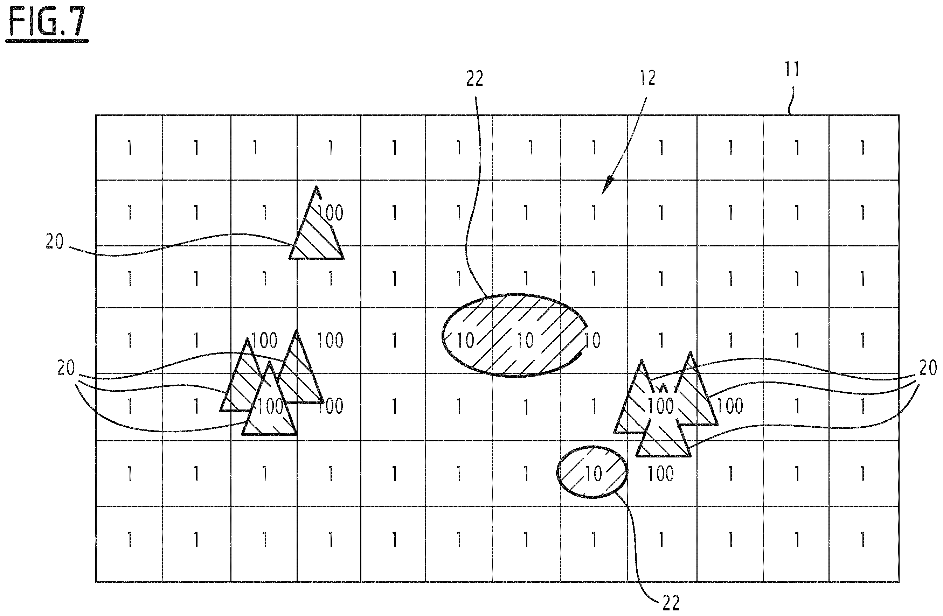

Dans le cas de l'image 11 illustré en figure 1, il est par exemple déterminé une carte de coût des dangers (illustrée en figure 5), une carte de coût des reliefs (illustrée en figure 6) et une carte de coût résultante après agrégation (figure 7). La carte de coût résultante est, par exemple, obtenue par la formule suivante :

$$C = 10 * C_{Danger} + 100 * C_{Relief} + 1 \qquad\qquad (1)$$

Où :

- $C$ est la matrice de coût résultante,
- $C_{Danger}$ est la matrice de coût des dangers, et
- $C_{Relief}$ est la matrice de coût des reliefs.

L'homme du métier comprendra que pour des questions de représentation, la résolution est faible sur les figures 5 à 7. Elle est en réalité plus forte, de 100 mètres par 100 mètres pour chaque pixel par exemple. L'homme du métier comprendra que pour des raisons de représentation, les cartes des exemples sont en deux dimensions, mais peuvent être étendues en N dimensions suivant l'application dans la limite des ressources matérielles disponibles.

Avantageusement, pour chaque zone élémentaire comprenant ou encadrant la représentation de la trajectoire principale 17 sur l'image 11, la valeur de coût déterminée pour ladite zone élémentaire est obtenue en ajoutant une valeur additionnelle prédéterminée à la valeur de coût obtenue en fonction du ou des critères de coût. Par le terme « encadrant la trajectoire », il est entendu les zones élémentaires situées de part et d'autre de la trajectoire principale 17, typiquement les zones élémentaires adjacentes à la trajectoire principale 17.

Cela revient à ajouter un masque de coût sur les zones encadrant la trajectoire principale 17. Cela permet de faire en sorte que la ou les trajectoires de contournement déterminées par la suite ne soit pas trop proche de la trajectoire principale 17 (donc trop proches de la zone de danger potentielle). La valeur additionnelle prédéterminée est, par exemple, élevée par rapport aux valeurs de coût obtenues en fonction des critères de coût (masque de fort coût).

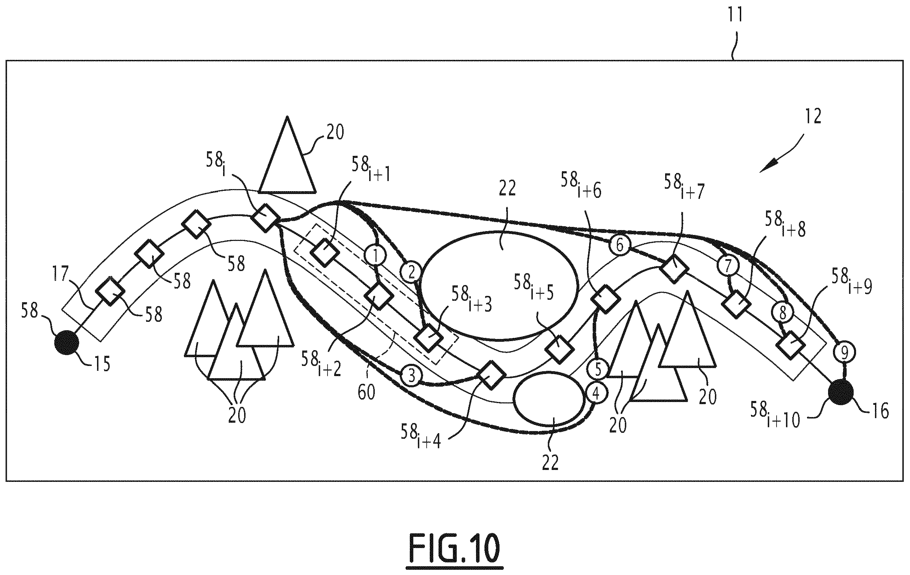

La phase de préparation 90 comprend une étape 130 d'échantillonnage de la trajectoire principale 17 pour obtenir des points de trajectoire 58 (illustrés en figure 10). L'échantillonnage est, par exemple, réalisé avec un pas prédéfini, par exemple, un point tous les 500 mètres.

La phase de préparation 90 comprend une étape 140 de détermination, pour chacun des points de trajectoire 58, en fonction des valeurs de coût déterminées pour les zones élémentaires, de distances de coût entre ledit point de trajectoire 58 et chaque zone élémentaire de l'image 11. L'ensemble des distances de coût déterminées pour ledit point de trajectoire 58 formant une carte de distances (au sens du coût) propre audit point de trajectoire 58.

Avantageusement, la carte de distances de chaque point de trajectoire 58 est déterminée par un propagateur Eikonal (algorithme de propagation eikonale).

Un exemple de détermination d'une carte de distances via un propagateur Eikonal est décrit dans ce qui suit dans le cas d'une stratégie de coût bidimensionnel et isotrope.

La méthode de fast-marching a été inventée par James Sethian en 1996. Elle permet de résoudre de façon rapide l'équation aux dérivées partielles suivantes, appelé équation Eikonale :

$$|\nabla u(x)| = 1/f(x) \text{ for } x \in \Omega$$
$$u(x) = 0 \text{ for } x \in \partial\Omega$$

$$(2)$$

Où :

- $x$ est compris dans un domaine $\Omega$. Dans le cas présent, $x$ est une position du plan, et donc un pixel.

- $\Omega$ est une portion de l'image 11 échantillonnée afin de produire toutes les positions $x$ pour lesquelles une solution $u(x)$ sera calculée. Plus ce maillage est fin, et plus la solution tend à être continue.

- $f(x)$ est une *vitesse* dont il est fourni la valeur en chaque point $x$ de $\Omega$. Dans la suite, la notion de *coût sera* plutôt employée, qui est homogène à l'inverse de $f(x)$, soit $\frac{1}{f(x)}$ .

- $u(x)$ est la distance à laquelle se trouve $x$ d'un point de départ donné $x_0$, utilisé pour démarrer la propagation (condition initiale, on parle de SEED).

La donnée de $u(x)$ pour tous les points $x$ de $\Omega$ est appelée carte de distance à $x_0$. Pour trouver le chemin le plus court au sens de $f(x)$, reliant tout point $x_1$ de $\Omega$ au SEED $x_0$, il convient de naviguer au sein de cette carte de coût en suivant en chaque endroit la direction de plus fort gradient. Par exemple, supposons que l'environnement 12 comprend deux types de zones : une zone enneigée et une zone non enneigée. Les pixels de la zone enneigée présentent tous un coût élevé, par exemple 2. Les pixels de la zone non enneigée présentent tous un coût faible, par exemple 1. Ceci signifie que se déplacer dans la zone enneigée demande plus d'effort que se déplacer dans la zone non enneigée. Donc on posera :

$$c(x) = \frac{1}{f(x)} = 2 \text{ } si \text{ } x \text{ } au \text{ } au \text{ } sein \text{ } de \text{ } la \text{ } zone \text{ } enneigée$$

$$c(x) = \frac{1}{f(x)} = 1 \text{ } si \text{ } x \text{ } au \text{ } au \text{ } sein \text{ } de \text{ } la \text{ } zone \text{ } non \text{ } enneigée$$

Il s'agit de la stratégie de coût appliquée.

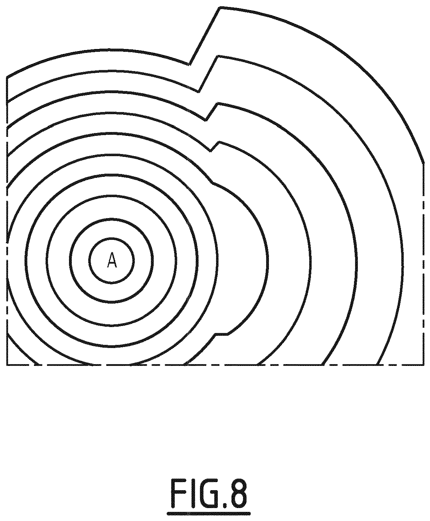

Comme illustré par la figure 8, la carte de distance $u(x)$ est obtenue en propageant l'équation eikonale depuis le point A. Cette carte de distance est matérialisée par des courbes de niveau. Les courbes de niveau figurent des points situés à même distance de A au sens du coût c(x).

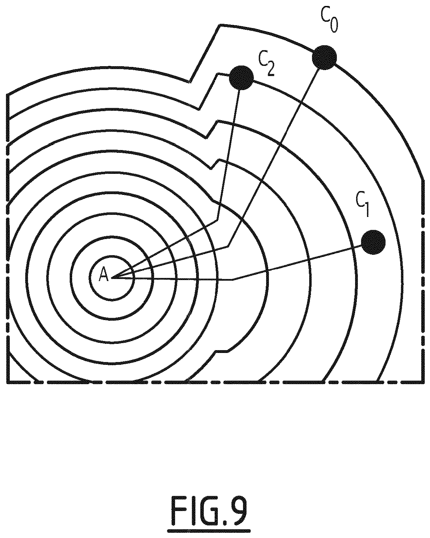

Comme illustré par la figure 9, la trajectoire optimale reliant tout point C de la zone à A se déduit du gradient local. Concrètement, c'est en se déplaçant perpendiculairement aux courbes de niveau que l'on minimisera le « coût » nécessaire pour aller d'un point C quelconque au point A (ceci revient à franchir perpendiculairement les lignes de niveau). La figure 9 illustre ce principe avec trois positions $C_0$, $C_1$ et $C_2$.

L'homme du métier comprendra que cet exemple se généralise à tout propagateur eikonal, qu'il soit isotrope ou anisotrope. Les équations et algorithmes mis en jeu ne sont pas exactement les mêmes que dans le cas du fast-marching détaillé plus haut, toutefois le principe reste fondamentalement similaire : génération d'une carte de distance, et déduction des trajectoires entre tout pixel et le SEED.

De manière plus générale, l'homme du métier comprendra que l'étape de détermination 140 est susceptible d'être mise en œuvre avec tout algorithme permettant de calculer une route à coût minimal entre deux points (la propagation eikonale étant choisie ici pour ces bonnes propriétés de performance et de généralisation isotropie/anisotropie).

La phase de préparation 90 comprend une étape 150 de détermination, pour chacun des points de trajectoire 58, en fonction de la carte de distances, des trajectoires de coût minimal reliant ledit point de trajectoire 58 à chacun ou à des points de trajectoire 58 suivants pris dans le sens du vol de l'aéronef 14. Pour cela, il est déterminé la courbe normale aux iso-distances entre le point de trajectoire 58 et chacun des points suivants 58.

Avantageusement, un seuil de coût est appliqué pour filtrer les trajectoires de coût minimal obtenues. Le but étant de filtrer, par exemple, une trajectoire de coût minimal vers un point d'arrivée qui serait trop proche du point de trajectoire considéré et qui ne permettrait donc pas de remplir une fonction de contournement, ou une trajectoire de coût minimal pour laquelle l'aéronef 14 effectuerait un retour en arrière (par exemple pour éviter une zone de relief ou une zone de danger ou une zone d'intervisibilité d'un capteur) ou une trajectoire de coût minimal qui n'aurait pas d'autres choix que de passer dans une zone de relief ou une zone de danger ou une zone d'intervisibilité d'un capteur.

Ainsi, il est déterminé au plus une seule trajectoire de de coût minimal entre un point de trajectoire 58 donné et chacun des points de trajectoires 58 suivants (dans le sens du vol de l'aéronef 14, c'est-à-dire depuis le point de départ 15 vers le point d'arrivée 16). Les trajectoires de coût minimal déterminées sont de potentielles trajectoires de contournement à partir dudit point de trajectoire 58.

Les trajectoires de coût minimal obtenues pour chaque point de trajectoire 58 sont, par exemple, mémorisées dans une mémoire 44 de l'installation électronique 26, par exemple, en vue d'être chargée ultérieurement lors de la phase d'exploitation 190 de l'aéronef 14. Le pilote aura, ainsi, un indicateur du nombre de trajectoires de coût minimal présentes sur son trajet et de la manière de les atteindre.

La phase d'exploitation 190 est une phase au cours de laquelle une zone de danger potentielle 60 s'étendant sur une portion de la trajectoire principale 17 a été identifiée alors même que l'aéronef 14 survole l'environnement 12 en suivant ladite trajectoire principale 17.

La phase d'exploitation 190 comprend une étape 200 de détermination en temps réel (à chaque instant) de la position de l'aéronef 14. La position de l'aéronef 14 est, par exemple, obtenue en fonction de mesures effectuées par un ou des capteurs localisés sur l'aéronef 14 ou au moyen de données en provenance d'un système au sol.

La phase d'exploitation 190 comprend une étape 210 de détermination du point de trajectoire 58, appelé point initial 58i, correspondant à ou le plus proche dans le sens du vol de l'aéronef 14 de la position de l'aéronef 14 déterminée en temps réel. En d'autres termes, le point initial $58_i$ est le point de trajectoire 58 qui coïncide avec la position déterminée de l'aéronef 14 lorsque la position déterminée coïncide avec un point de trajectoire 58, ou est le point de trajectoire 58 suivant dans le sens du vol de l'aéronef 14.

Les points de trajectoire 58 suivant le point initial $58_i$ dans le sens du vol de l'aéronef 14 sont appelés points suivants $58_{i+1}$, ..., $58_{i+N}$.

La phase d'exploitation 190 comprend une étape 220 de détermination de trajectoires de contournement reliant le point initial $58_i$ aux points suivants $58_{i+1}$, ..., $58_{i+N}$ en fonction des trajectoires de coût minimal déterminées pour ledit point initial $58_i$ et de l'étendue de la zone de danger potentielle 60 le long de la trajectoire principale 17.

Par exemple, l'étape de détermination 220 comprend l'élimination des trajectoires de coût minimal déterminées pour le point initial $58_i$ dont le point d'arrivée se trouve dans la zone de danger potentielle 60. Les trajectoires de contournement viables sont alors les trajectoires de coût minimal restantes. Plus précisément, la trajectoire de contournement optimale est la trajectoire de contournement dont le point d'arrivée est le plus proche du point initial $58_i$. Ainsi, la trajectoire de contournement optimale est la trajectoire de contournement qui rejoint au plus tôt la trajectoire principale 17. Le point d'arrivée de la trajectoire de contournement optimale est un point de trajectoire $58_{i+1}$, ..., $58_{i+N}$ suivant le point initial $58_i$.

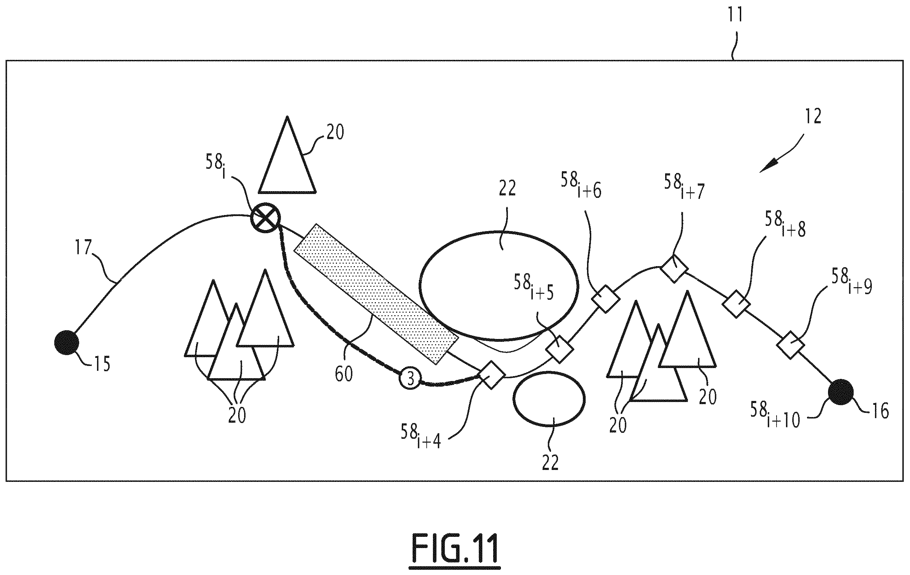

Un exemple de mise en œuvre de l'étape 220 de détermination de trajectoires de contournement est notamment illustré sur les figures 10 et 11.

Notamment sur la figure 10, il est illustré un feuillus de trajectoires de coût minimal 1 à 9 partant d'un point initial $58_i$ vers différents points suivants $58_{i+2}$, $58_{i+3}$, $58_{i+4}$, $58_{i+6}$, $58_{i+7}$, $58_{i+8}$, $58_{i+9}$, $58_{i+10}$. La trajectoire 1 correspond à un contournement d'un danger recouvrant le point $58_{i+1}$, la trajectoire 2 correspond à un contournement d'un danger recouvrant les points $58_{i+1}$ et $58i_{+2}$, etc. Un masque de coût encadrant la trajectoire principale 17 est aussi représenté sur cette figure.

Il est à noter que pour les points suivants $58_{i+1}$ et $58_{i+5}$ aucune trajectoire de coût minimal n'a été obtenue car de tels points sont soit trop rapprochés du point initial $58_i$ pour permettre un contournement effectif (cas du point $58_{i+1}$), soit sont trop proches des zones de danger ou de relief existantes (cas du point $58_{i+5}$). Il est également à noter qu'en fonction de contraintes environnementales ou de dynamiques de vol, certaines trajectoires de coût minimal seront identiques (cas des trajectoires 4 et 5).

Parmi les trajectoires de coût minimal déterminées, les trajectoires de contournement sont les trajectoires dont le point d'arrivée est situé en dehors de la zone de danger potentielle 60, c'est-à-dire les trajectoires 3 à 9. Les trajectoires 1 et 2 sont quant à elles éliminées.

Comme illustré par la figure 11, la trajectoire de contournement optimale est la trajectoire de contournement restante dont le point d'arrivée (point de trajectoire) est le plus proche du point initial $58_i$, en l'occurrence la trajectoire 3. Les autres trajectoires de contournement déterminées 4 à 9 sont des alternatives possibles qui rejoignent la trajectoire principale 17 plus tard que la trajectoire de contournement optimale.

La phase d'exploitation 190 comprend une étape 230 d'affichage, sur un afficheur (par exemple l'afficheur 52 de l'installation électronique 26), d'une image 11 de l'environnement 12 survolé par l'aéronef 14, une représentation des éléments suivants ayant été ajoutée sur l'image 11 affichée :

- la trajectoire principale 17 de l'aéronef 14 (au moins en partie), et
- la trajectoire de contournement optimale déterminée pour une zone de danger potentielle 60 donnée, et éventuellement, les trajectoires de contournement alternatives déterminées.

Dans l'exemple décrit sur les figures 10 et 11, l'image 11 affichée est, par exemple, l'image 11 illustrée sur la figure 11.

La phase d'exploitation 190 comprend une étape 240 de modification de la trajectoire de l'aéronef 14 par rapport à la trajectoire principale 17, en fonction de la ou des trajectoires de contournement représentées sur l'image 11 affichée par l'afficheur 52 en vue de contourner la zone de danger potentielle 60. L'étape de modification 240 a pour visée de contourner la zone de danger potentielle 60 tout en permettant à l'aéronef 14 de reprendre au plus vite sa mission. L'étape 240 est, par exemple, mise en œuvre par le pilote en fonction des trajectoires de contournement représentées sur l'image 11 affichée sur l'afficheur.

Avantageusement, en changeant la stratégie d'agrégation des cartes de coût unitaire, la carte de coût résultante ne sera pas la même et donc les routes de déroutement seront différentes, ce qui permet d'adresser encore d'autres alternatives de déroutement.

Ainsi, le présent procédé permet d'assister les pilotes dans leurs prises de décision sur leurs navigations grâce à une anticipation des routes de contournement permettant de contourner une zone de danger imprévue, tout en permettant à l'aéronef de rattraper ultérieurement sa trajectoire principale en vue de reprendre sa mission. Ainsi, avantageusement, en vol, lors de la survenue d'un imprévu (danger, météo...), la trajectoire principale de l'aéronef est modifiée vers un point de contournement en fonction des trajectoires de contournement déterminées, et, de préférence, de la trajectoire de contournement optimale déterminée.

En particulier, les trajectoires de coût minimal déterminées (permettant ensuite d'obtenir les trajectoires de contournement) permettent d'aider le pilote aussi bien durant la phase de préparation de mission que de façon réactive pendant la phase de vol. De telles trajectoires fournissent au pilote une meilleure conscience des options disponibles.

Ainsi, le présent procédé permet d'améliorer la prise de décision d'un pilote face à des situations imprévues.

Notamment, le présent procédé est applicable pour la replanification automatique des trajectoires de contournement des zones météorologiques dégradées (tempête, zone de turbulences), ou encore pour la gestion du trafic aérien permettant de planifier les trajectoires de contournement de plisseurs avions suite à des situations imprévues (nouvelles priorités suite à une urgence, surcharge du trafic sur une zone).

**Revendications**

1. Procédé de détermination de trajectoires de contournement d'une zone de danger potentielle (60) s'étendant sur une portion d'une trajectoire principale (17) définie pour un aéronef (14) dans un environnement (12), la trajectoire principale (17) ayant été définie sans la connaissance de la zone de danger potentielle (60), les trajectoires de contournement rejoignant la trajectoire principale (17) une fois la zone de danger potentielle (60) contournée, le procédé étant mis en oeuvre par une installation électronique (26), le procédé comprenant une phase de préparation comprenant les étapes suivantes :

**a.** l'obtention d'une image (11) de l'environnement (12) destiné à être survolé par l'aéronef (14) entre un point de départ (15) et un point d'arrivée (16), une représentation d'une trajectoire principale (17) destinée à être parcourue par l'aéronef (14) entre le point de départ (15) et le point d'arrivée (16) ayant été ajoutée sur l'image (11),

b. le maillage de l'image (11) en zones élémentaires,

c. la détermination, pour chaque zone élémentaire de l'image (11), d'une valeur de coût en fonction d'au moins un critère de coût, le au moins un critère de coût étant relatif au survol de l'environnement (12) par l'aéronef (14),

**d.** l'échantillonnage de la trajectoire principale (17) représentée sur l'image (11) pour obtenir des points de trajectoire (58),

**e.** pour chacun des points de trajectoire (58), la détermination, en fonction des valeurs de coût déterminées pour les zones élémentaires, de distances de coût entre ledit point de trajectoire (58) et chaque zone élémentaire de l'image (11), l'ensemble des distances de coût déterminées pour ledit point de trajectoire (58), formant une carte de distances,

**f.** pour chacun des points de trajectoire (58), la détermination, en fonction de la carte de distances, des trajectoires de coût minimal reliant ledit point de trajectoire (58) à des points de trajectoire (58) suivants pris dans le sens du vol de l'aéronef (14),

le procédé comprenant, en outre, une phase d'exploitation au cours de laquelle une zone de danger potentielle (60) s'étendant sur une portion de la trajectoire principale (17) a été identifiée alors même que l'aéronef (14) survole l'environnement (12) en suivant ladite trajectoire principale (17), la phase d'exploitation comprenant :

**a.** la détermination en temps réel de la position de l'aéronef (14),

b. la détermination du point de trajectoire (58), appelé point initial ($58_i$), correspondant à ou le plus proche dans le sens du vol de l'aéronef (14) de la position de l'aéronef (14) déterminée en temps réel, les points de trajectoire (58) suivant le point initial ($58_i$) dans le sens du vol de l'aéronef (14) étant appelés points suivants ($58_{i+1}$, ..., $58_{i+N}$), et

c. la détermination de trajectoires de contournement reliant le point initial ($58_i$) aux points suivants ($58_{i+1}$, ..., $58_{i+N}$) en fonction des trajectoires de coût minimal déterminées pour ledit point initial ($58_i$) et de l'étendue de la zone de danger potentielle (60).

2. Procédé selon la revendication 1, dans lequel l'étape de détermination de trajectoires de contournement comprend l'élimination des trajectoires de coût minimal déterminées dont le point d'arrivée se trouve dans la zone de danger potentielle (60), les trajectoires de contournement étant les trajectoires de coût minimal restantes.

3. Procédé selon la revendication 2, dans lequel l'étape de détermination de trajectoires de contournement comprend la détermination d'une trajectoire de contournement optimale lorsque plusieurs trajectoires de contournement ont été déterminées pour un même point initial ($58_i$), la trajectoire de contournement optimale étant la trajectoire de contournement dont le point d'arrivée est le plus proche du point initial ($58_i$).

4. Procédé selon l'une quelconque des revendications 1 à 3, dans lequel la phase d'exploitation comprend l'affichage, sur un afficheur (52), d'une image (11) de l'environnement (12) survolé par l'aéronef (14), une représentation des éléments suivants ayant été ajoutée sur l'image (11) affichée :

i. la trajectoire principale (17) de l'aéronef (14), et

ii. les ou au moins une trajectoire de contournement déterminée(s).

5. Procédé selon la revendication 4, dans lequel la phase d'exploitation comprend une étape de modification de la trajectoire de l'aéronef (14) par rapport à la trajectoire principale (17), en fonction de la ou des trajectoires de contournement représentées sur l'image (11) affichée par l'afficheur (52) en vue de contourner la zone de danger potentielle (60).

6. Procédé selon l'une quelconque des revendications 1 à 5, dans lequel pour chaque zone élémentaire comprenant ou encadrant la représentation de la trajectoire principale (17) sur l'image (11), la valeur de coût déterminée pour ladite zone élémentaire est obtenue en ajoutant une valeur additionnelle prédéterminée à la valeur de coût obtenue en fonction du ou des critères de coût.

7. Procédé selon l'une quelconque des revendications 1 à 6, dans lequel l'environnement (12) comprend au moins une zone de relief (20) et/ou au moins une zone de danger (22) et/ou au moins une zone d'intervisibilité pour un capteur et/ou au moins une zone de météo défavorable et/ou au moins une zone urbaine, le ou au moins un critère de coût

**EP 3 933 809 B1**

étant choisi dans la liste constituée de :

> **a.** un critère d'évitement des zones de relief (20) par l'aéronef (14),
> **b.** un critère d'évitement des zones de danger (22) par l'aéronef (14),
> **c.** un critère d'évitement des zones d'intervisibilité d'un capteur par l'aéronef (14),
> **d.** un critère d'évitement des zones de météo défavorable par l'aéronef (14), et
> **e.** un critère d'évitement des zones urbaines par l'aéronef (14).

**8.** Procédé selon l'une quelconque des revendications 1 à 7, dans lequel la carte de distances de chaque point de trajectoire (58) est déterminée par un algorithme de propagation Eikonale.

**9.** Installation électronique (26) configurée pour mettre en oeuvre un procédé de détermination selon l'une quelconque des revendications 1 à 8.

**10.** Aéronef (14) comprenant une installation électronique (26) selon la revendication 9.


**Patentansprüche**

**1.** Verfahren zum Bestimmen von Umgehungsstrecken einer potenziellen Gefahrenzone (60), die sich über einen Teil einer Hauptstrecke (17) erstreckt, die für ein Luftfahrzeug (14) in einer Umgebung (12) definiert ist, wobei die Hauptstrecke (17) ohne Kenntnis der potenziellen Gefahrenzone (60) definiert worden ist, wobei die Umgehungsstrecken auf die Hauptstrecke (17) treffen, nachdem die potenzielle Gefahrenzone (60) umgangen worden ist, das Verfahren von einer elektronischen Anlage (26) durchgeführt wird, das Verfahren umfassend eine Vorbereitungsphase, umfassend die folgenden Schritte:

> **a.** Erlangen eines Bilds (11) der Umgebung (12), die dazu bestimmt ist, von dem Luftfahrzeug (14) zwischen einem Startpunkt (15) und einem Zielpunkt (16) überflogen zu werden, wobei eine Darstellung einer Hauptstrecke (17), die dazu bestimmt ist, von dem Luftfahrzeug (14) zwischen dem Startpunkt (15) und dem Zielpunkt (16) durchflogen zu werden, zu dem Bild (11) hinzugefügt wurde,
> **b.** Rastern des Bilds (11) in Elementarzonen,
> **c.** Bestimmen, für jede Elementarzone des Bilds (11), eines Kostenwertes abhängig von mindestens einem Kostenkriterium, wobei sich das mindestens eine Kostenkriterium auf das Überfliegen der Umgebung (12) durch das Luftfahrzeug (14) bezieht,
> **d.** Abtasten der Hauptstrecke (17), die auf dem Bild (11) dargestellt ist, um Streckenpunkte (58) zu erlangen,
> **e.** für jeden der Streckenpunkte (58), Bestimmen, abhängig von den für die Elementarzone bestimmten Kostenwerten, von Kostenentfernungen zwischen dem Streckenpunkt (58) und jeder Elementarzone des Bilds (11), wobei die Gesamtheit der Kostenentfernungen, die für den genannten Streckenpunkt (58) bestimmt werden, eine Entfernungskarte bilden,
> **f.** für jeden der Streckenpunkte (58), Bestimmen, abhängig von der Entfernungskarte, von Strecken mit minimalen Kosten, die den Streckenpunkt (58) mit folgenden Streckenpunkten (58) verbinden, die in der Flugrichtung des Luftfahrzeugs (14) genommen werden,

das Verfahren ferner umfassend eine Betriebsphase, in der eine potenzielle Gefahrenzone (60), die sich über einen Abschnitt der Hauptstrecke (17) erstreckt, identifiziert wurde, während das Luftfahrzeug (14) die Umgebung (12) entlang der Hauptstrecke (17) überfliegt, die Betriebsphase umfassend:

> **a.** Bestimmen, in Echtzeit, der Position des Luftfahrzeugs (14),
> **b.** Bestimmen des als Anfangspunkt ($58_i$) bezeichneten Streckenpunkts (58), der der in Echtzeit bestimmten Position des Luftfahrzeugs (14) entspricht oder in Flugrichtung des Luftfahrzeugs (14) am nächsten ist, wobei die dem Anfangspunkt ($58_i$) in Flugrichtung des Luftfahrzeugs (14) nachfolgenden Streckenpunkte (58) als Folgepunkte ($58_{i+1}$, ..., $58_{i+N}$) bezeichnet werden, und
> **c.** Bestimmen von Umgehungsstrecken, die den Anfangspunkt ($58_i$) mit den nachfolgenden Punkten ($58_{i+1}$, ..., $58_{i+N}$) verbinden, abhängig von den für den Anfangspunkt ($58_i$) bestimmten Strecken mit minimalen Kosten und der Erstreckung der potenziellen Gefahrenzone (60).

**2.** Verfahren nach Anspruch 1, wobei der Schritt eines Bestimmens von Umgehungsstrecken ein Eliminieren der bestimmten Strecken mit minimalen Kosten umfasst, deren Endpunkt sich in der potenziellen Gefahrenzone (60) befindet, wobei die Umgehungsstrecken die verbleibenden Strecken mit minimalen Kosten sind.

3. Verfahren nach Anspruch 2, wobei der Schritt eines Bestimmens von Umgehungsstrecken ein Bestimmen einer optimalen Umgehungsstrecke umfasst, wenn mehrere Umgehungsstrecken für denselben Anfangspunkt ($58_i$) bestimmt worden sind, wobei die optimale Umgehungsstrecke die Umgehungsstrecke ist, deren Endpunkt dem Anfangspunkt ($58_i$) am nächsten liegt.

4. Verfahren nach einem der Ansprüche 1 bis 3, wobei die Betriebsphase das Anzeigen eines Bilds (11) der Umgebung (12), die von dem Luftfahrzeug (14) überflogen wird, auf einer Anzeige (52) umfasst, wobei eine Darstellung der folgenden Elemente zu dem angezeigten Bild (11) hinzugefügt wurde:

   i. der Hauptstrecke (17) des Luftfahrzeugs (14), und
   ii. der oder mindestens einer bestimmten Umgehungsstrecke(n).

5. Verfahren nach Anspruch 4, wobei die Betriebsphase einen Änderungsschritt der Strecke des Luftfahrzeugs (14) in Bezug auf die Hauptstrecke (17) abhängig von der oder den Umgehungsstrecken umfasst, die auf dem von der Anzeige (52) angezeigten Bild (11) dargestellt sind, um die potenzielle Gefahrenzone (60) zu umgehen.

6. Verfahren nach einem der Ansprüche 1 bis 5, wobei für jede Elementarzone, die die Darstellung der Hauptstrecke (17) auf dem Bild (11) umfasst oder umrahmt, der für die Elementarzone bestimmte Kostenwert erlangt wird, indem ein vorbestimmter zusätzlicher Wert zu dem Kostenwert addiert wird, der abhängig von dem oder den Kostenkriterien erlangt wird.

7. Verfahren nach einem der Ansprüche 1 bis 6, wobei die Umgebung (12) mindestens eine Reliefzone (20) und/oder mindestens eine Gefahrenzone (22) und/oder mindestens eine Zone, die für einen Sensor nicht einsehbar ist, und/oder mindestens eine Zone mit ungünstigem Wetter und/oder mindestens eine städtische Zone umfasst, wobei das oder mindestens ein Kostenkriterium ausgewählt ist aus der Liste, bestehend aus:

   a. einem Vermeidungskriterium von Reliefzonen (20) durch das Luftfahrzeug (14),
   b. ein Vermeidungskriterium von Gefahrenzonen (22) durch das Luftfahrzeug (14),
   c. ein Vermeidungskriterium von Zonen, die für einen Sensor nicht einsehbar sind, durch das Luftfahrzeug (14),
   d. ein Vermeidungskriterium von Schlechtwetterzonen durch das Luftfahrzeug (14), und
   e. ein Vermeidungskriterium städtischer Zonen durch das Luftfahrzeug (14).

8. Verfahren nach einem der Ansprüche 1 bis 7, wobei die Entfernungskarte von jedem Streckenpunkts (58) durch einen Eikonale-Ausbreitungsalgorithmus bestimmt wird.

9. Elektronische Anlage (26), die konfiguriert ist, um ein Bestimmungsverfahren nach einem der Ansprüche 1 bis 8 durchzuführen.

10. Luftfahrzeug (14), umfassend eine elektronische Anlage (26) nach Anspruch 9.

**Claims**

1. A method for determining bypass trajectories of a potential danger zone (60) extending over a portion of a main trajectory (17) defined for an aircraft (14) in an environment (12), the main trajectory (17) having been defined without knowledge of the potential danger zone (60), the bypass trajectories rejoining the main trajectory (17) once the potential danger zone (60) is bypassed, the method being implemented by an electronic installation (26), the method comprising a preparation phase comprising the following steps:

   a. obtaining an image (11) of the environment (12) intended to be flown over by the aircraft (14) between a starting point (15) and an arrival point (16), a representation of a main trajectory (17) intended to be traveled by the aircraft (14) between the starting point (15) and the arrival point (16) having been added to the image (11),
   b. meshing the image (11) into elementary zones,
   c. determining, for each elementary zone of the image (11), a cost value as a function of at least one cost criterion, the at least one cost criterion being relative to the overflight of the environment (12) by the aircraft (14),
   d. sampling the main trajectory (17) represented on the image (11) to obtain trajectory points (58),

**e.** for each of the trajectory points (58), determining, as a function of the cost values determined for the elementary zones, cost distances between said trajectory point (58) and each elementary zone of the image (11), the set of cost distances determined for said trajectory point (58) forming a distance map,

**f.** for each of the trajectory points (58), determining, as a function of the distance map, the minimum cost trajectories connecting said trajectory point (58) to subsequent trajectory points (58) taken in the direction of the flight of the aircraft (14),

the method comprising, in addition, an exploitation phase during which a potential danger zone (60) extending over a portion of the main trajectory (17) has been identified while the aircraft (14) flies over the environment (12) following said main trajectory (17), the exploitation phase comprising:

**a.** real-time determination of the position of the aircraft (14),

**b.** determination of the trajectory point (58), called the initial point ($58_i$), corresponding to or closest in the direction of the flight of the aircraft (14) to the real-time determined position of the aircraft (14), the trajectory points (58) following the initial point ($58_i$) in the direction of the flight of the aircraft (14) being called subsequent points ($58_{i+1}$ ..., $58_{i+N}$), and

**c.** determination of the bypass trajectories connecting the initial point ($58_i$) to the subsequent points ($58_{i+1}$ ..., $58_{i+N}$) as a function of the minimum cost trajectories determined for said initial point ($58_i$) and the extent of the potential danger zone (60).

2. The method according to claim 1, wherein the step of determining bypass trajectories comprises the elimination of the determined minimum cost trajectories the arrival point of which is located in the potential danger zone (60), the bypass trajectories being the remaining minimum cost trajectories.

3. The method according to claim 2, wherein the step of determining bypass trajectories comprises the determination of an optimal bypass trajectory when several bypass trajectories have been determined for the same initial point ($58_i$), the optimal bypass trajectory being the bypass trajectory the arrival point of which is closest to the initial point ($58_i$).

4. The method according to any one of claims 1 to 3, wherein the exploitation phase comprises displaying, on a display (52), an image (11) of the environment (12) flown over by the aircraft (14), a representation of the following elements having been added to the displayed image (11):

   i) the main trajectory (17) of the aircraft (14), and
   ii) the or at least one determined bypass trajectory.

5. The method according to claim 4, wherein the exploitation phase comprises a step of modifying the trajectory of the aircraft (14) relative to the main trajectory (17), as a function of the bypass trajectory or trajectories represented on the image (11) displayed by the display (52) in order to bypass the potential danger zone (60).

6. The method according to any one of claims 1 to 5, wherein for each elementary zone comprising or framing the representation of the main trajectory (17) on the image (11), the cost value determined for said elementary zone is obtained by adding an additional predetermined value to the cost value obtained as a function of the cost criterion or criteria.

7. The method according to any one of claims 1 to 6, wherein the environment (12) comprises at least one high relief zone (20) and/or at least one danger zone (22) and/or at least one intervisibility zone for a sensor and/or at least one adverse weather zone and/or at least one urban zone, the or at least one cost criterion being chosen from the list constituted of:

   **a.** a criterion for avoiding high relief zones (20) by the aircraft (14),
   **b.** a criterion for avoiding danger zones (22) by the aircraft (14),
   **c.** a criterion for avoiding intervisibility zones of a sensor by the aircraft (14),
   **d.** a criterion for avoiding adverse weather zones by the aircraft (14), and
   **e.** a criterion for avoiding urban zones by the aircraft (14).

8. The method according to any one of claims 1 to 7, wherein the distance map of each trajectory point (58) is determined by an Eikonal propagation algorithm.

9. An electronic installation (26) configured to implement a method of determining according to any one of claims 1 to 8.

**10.** An aircraft (14) comprising an electronic installation (26) according to claim 9.

**FIG.1**

26

42

44

46

40

29

52

48

50

FIG.2

FIG.3

FIG.4

# FIG.5

FIG.6

**FIG.7**

FIG.8

FIG.9

FIG.10

FIG.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2969753 A
- US 20070276553 A
- US 2008154493 A
- FR 2789771 A1